# EUROPÄISCHE PATENTSCHRIFT

(11) **EP 2 260 152 B1**
(45) Veröffentlichungstag und Bekanntmachung des Hinweises auf die Patenterteilung: **16.03.2016**
(21) Anmeldenummer: 09723791.1
(22) Anmeldetag: 24.03.2009
(51) Int. Cl.: E04B 1/80

(54) **VAKUUM-ISOLIERELEMENT**
VACUUM-INSULATION ELEMENT
ÉLÉMENT ISOLANT SOUS VIDE

(30) Priorität: 26.03.2008 EP 08005606; 16.10.2008 EP 08018167
(43) Veröffentlichungstag der Anmeldung: 15.12.2010
(73) Patentinhaber: ROTTER, Thomas, 65239 Massenheim (DE)
(72) Erfinder: ROTTER, Thomas, 65239 Massenheim (DE)
(74) Vertreter: Mergel, Volker
(86) Internationale Anmeldenummer: PCT/EP2009/002147
(87) Internationale Veröffentlichungsnummer: WO 2009/118154

(56) Entgegenhaltungen:
- WO-A-2005/038166
- DE-A1- 2 349 401
- DE-U1- 29 519 767
- US-A- 3 397 720
- US-A- 5 011 729

## Beschreibung

### Gebiet der Erfindung

Die vorliegende Erfindung betrifft allgemein ein Isolierelement und speziell ein Vakuum-Isolierelement, das aus mehreren übereinander angeordneten geformten Platten besteht, wobei die Zwischenräume zwischen den geformten Platten evakuiert werden können.

### Hintergrund der Erfindung

In Zeiten steigender Energiekosten besteht in den verschiedensten Bereichen verstärkt das Bedürfnis nach der Möglichkeit Energie einzusparen oder effektiver zu nutzen. Ein möglicher Schritt hierzu liegt darin, in energieintensiven Bereichen, wie beispielsweise der Wärmeisolation, den Wirkungsgrad der eingesetzten Energie zu verbessern, in dem nutzlos verpuffende Energie eingespart wird. Energieintensiv sind insbesondere das Kühlen oder Heizen von Geräten (z.B. Kühlschränke und - truhen, Heizkessel, Warmwasserspeicher - z.B. von Solaranlagen, Waschmaschinen), von Gebäuden oder auch von Fahrzeugen (z.B. Thermoaufbauten), wobei häufig zusätzlich das Problem besteht, dass eine verbesserte Isolierung mehr Platz beansprucht als dafür zur Verfügung steht.

Darüber hinaus besteht ein Bedarf für Nachrüst-Techniken, mit denen bereits vorhandene Geräte, Gebäude oder Fahrzeuge nachträglich besser isoliert werden können.

Für die Isolierung von Geräten oder Gebäuden sind verschiedene Systeme bekannt. Die Patentschrift DE 689 28 547 T2 beschreibt beispielsweise ein ultradünnes, kompaktes Vakuumisolationsmaterial, das aus dünnen Metallplatten besteht, die luftdicht miteinander verschweißt werden. Um das Kollabieren der Platten unter einem hochgradigen Vakuum (höchstens 1,33 x 10⁻³ Pa) zu verhindern, werden zwischen den Platten Abstandshalter eingebracht. Als Abstandshalter kommen erfindungsgemäß Glas- oder Glaskeramik-Kugeln oder ein dünnes (Glas-) Gewebe mit hervorstehenden Bereichen, z.B. Kugeln oder Stegen in Betracht. Insbesondere die erfindungsgemäße Positionierung der Kugeln ist jedoch aufwendig und benötigt mehrere zusätzliche Arbeitsschritte bei der Herstellung.

Die Patentschrift DE 691 22 249 T2 offenbart eine sehr ähnliche Technologie, die sich in der Verwendung eines aus einem Stück bestehenden Abstandhalters anstelle von vielen einzelnen Abstandshaltern unterscheidet. Der erfindungsgemäße Abstandshalter besteht dabei aus einer dünnen steifen Trägertafel, die mit einer Vielzahl von Vorsprüngen die zu evakuierenden Wände der Wärmeisolierplatte auseinander hält. Es können auch mehrere dieser Abstandshalter übereinander gelegt verwendet werden. Wände und Trägertafel bestehen dabei aus unterschiedlichen Materialien, nämlich Metall und einem Material niedriger Wärmeleitfähigkeit (z.B. mit Emaille beschichtetes Glas).

Auch diese Wärmeisolierplatten haben den Nachteil, dass sie relativ aufwendig hergestellt werden müssen, da eine extra Fertigung von Wandplatten und Trägertafeln aus verschiedenen Materialien notwendig ist. Darüber hinaus werden vergleichsweise schwere Materialien verwendet.

Stellvertretend für andere Patente aus diesem Bereich sei hier der Vollständigkeit halber noch auf die EP 1 475 486 B1 hingewiesen, die Vakuumisolationspaneele offenbart. Die erfindungsgemäßen Vakuumisolationspaneele bestehen aus einer flächigen Wärmedämmplatte (Schaum, Fasermaterial oder mikroporöses Isoliermaterial) mit einer Umhüllung aus einer metallhaltigen Folie, die luftdicht verschweißt und evakuiert ist. Die Paneele haben die Form von Parallelflachen, damit sie sich trotz der Schweißnähte lückenlos aneinander legen lassen.

Durch die dünnwandige Umhüllung der Paneele mit Metallfolien sind diese Isolierelemente sehr verletzlich. Schon beim Einbauen durch flächiges Ankleben oder auch in aufwendigen Verschäumungskonstruktionen kann es leicht zu einer Beschädigung der Metallfolie kommen, wodurch das Vakuum belüftet wird. Problematisch ist auch, dass derartige Isolierelemente eine relativ große Abmessungstoleranz aufweisen.

Aus der DE 23 49 401 sind zweischalige Zellkernelemente unter Grobvakuum bekannt, bei welchen z.B. pyramidenförmige Erhebungen gebildet werden, zwischen denen geradlinige Tragstreifen liegen. Die Abstützung der Elemente erfolgt mittels Kontaktstempeln und Zwischenpolstern, wodurch die Herstellung der Elemente und deren Verbindung sehr kompliziert erscheint und damit kostenträchtig sein dürfte. Es könnten ferner thermische Spannungen und/oder Verschiebungen entstehen, so dass eine solch komplexe Anordnung empfindlich und störungsanfällig zu sein scheint. Auch ist nicht ersichtlich, ob einer solche Anordnung hinreichend langlebig ist.

### Allgemeine Beschreibung der Erfindung

Der vorliegenden Erfindung liegt daher die Aufgabe zugrunde ein einfaches und kostengünstiges Vakuum-Isolierelement bereit zu stellen, das zum einen eine hohe Wärmeisolationsfähigkeit und ein geringes Gewicht hat, stabil, unempfindlich und maßhaltig ist und das sich zum anderen im Zuge der Erstausrüstung, aber auch als Nachrüstung, einfach und ohne großen Aufwand an zu isolierenden Objekten anbringen lässt.

Die Aufgabe der Erfindung wird durch den Gegenstand von Anspruch 1 gelöst; vorteilhafte Weiterbildungen der Erfindung sind in den Unteransprüchen definiert.

Erfindungsgemäß wird ein evakuierbares Vakuum-Isolierelement bereitgestellt, welches aus zumindest zwei geformten Platten besteht, wobei die einzelnen Platten mittels zumindest eines umlaufenden Dichtrahmens und zumindest einer umlaufenden Dichtfläche luftdicht verbunden werden.

Unter geformten Platten werden im Rahmen dieser Erfindung morphologisch strukturierte Objekte verstanden, die jedoch im Wesentlichen eine flächige Form aufweisen. Diese flächige Form kann insgesamt gebogen sein, um das Anpassen der Vakuum-Isolierelemente an gebogene Objekte zu ermöglichen. So können die Vakuum-Isolierelemente beispielsweise an ein gebogenes Oberlicht angepasst sein.

Gemäß Anspruch 1 zeigen die geformten Platten bei flacher Lagerung eine Vielzahl von Strukturelementen, die abwechselnd nach unten oder nach oben, also in entgegengesetzte Richtungen, von der Symmetrieebene der Platte abweichen. Dabei werden nach unten weisende Strukturelemente als Vertiefungen bezeichnet und nach oben weisende Strukturelemente als Erhebungen beschrieben, wobei ersichtlich ist, dass "oben" und "unten" nicht als absolute Richtungen im Raum zu verstehen sind, da die Elemente in allen Orientierungen verwendet werden können und ohnehin vorzugsweise spiegelsymmetrisch sind. Die Form dieser Strukturelemente wird an die Anforderungen, zum einen an die Stabilität und zum anderen an eine möglichst geringe Wärmeübertragung durch das Vakuum-Isolierelement, angepasst. Eine stabile Form mit geringer Wärmeübertragung kann an der Statik von Kuppelgewölben orientierte Strukturelemente umfassen, z.B. mit rundem Querschnitt. Es sind aber auch Strukturelemente, die zusammen mit den Strukturelementen einer benachbarten Platte wabenförmige Querschnitte zeigen möglich.

Für die Anordnung der einzelnen Strukturelemente der geformten Platten befinden sich beim Übereinanderlegen einzelner, benachbarter Platten, Erhebungen der einen Platte genau gegenüber den Vertiefungen der anderen Platte, so dass sich diese integralen, insbesondere kuppelartigen Strukturelemente im zusammengebauten Zustand gegeneinander abstützen und so als Stützstellen zwischen benachbarten geformten Platten dienen. Anders ausgedrückt stützen sich die in Richtung der benachbarten anderen Platte gerichteten Erhebungen bzw. Vertiefungen der einen Platte gegen die Erhebungen bzw. Vertiefungen der benachbarten anderen Platte ab, die in Richtung der einen Platte weisen. Die Stützstellen sind dabei rasterförmig verteilt, wobei unter dem Begriff "Raster" auch unregelmäßige Verteilungen verstanden werden können. Die jeweils anderen Erhebungen oder Vertiefungen der einen Platte, die von der benachbarten anderen Platte weggerichtet sind, bilden zusammen mit den Erhebungen bzw. Vertiefungen der benachbarten anderen Platte, die von der einen Platte weggerichtet sind, zwischen den Stützstellen einzelne Hohlraumzellen aus, die miteinander verbunden sind oder miteinander kommunizieren. Die Gesamtheit aller Hohlraumzellen zwischen zwei benachbarten Platten bildet dabei einen zusammenhängenden oder gemeinsamen Hohlraum aus, der evakuiert wird. Dabei wird jeweils ein Hohlraum weniger ausgebildet als geformte Platten verwendet werden. Bei der Verwendung von vier geformten Platten werden demgemäß drei Hohlräume, bei der Verwendung von zwei geformten Platten ein Hohlraum ausgebildet.

Mit anderen Worten bilden die Erhebungen der ersten (unteren) Platte und die korrespondierenden Vertiefungen der zweiten (oberen) Platte sich gegenüberliegende aus Plattenmaterial ausgeformte Punktstellen, die sich im evakuierten Zustand gegeneinander abstützen und bilden somit ein integrales Punkt-Raster von Stützstellen. Das Punktraster hat den Vorteil einer geringen Kontaktfläche, so dass die Wärmeleitfähigkeit niedrig gehalten wird. Hierbei ist "Punktstelle" oder "Punktraster" ersichtlich nicht im mathematischen Sinne zu verstehen, sondern die "Punkte" bilden möglichst kleine geschlossene Flächen, z.B. in der Größenordnung eines oder ggf. einiger Quadratmillimeter. Der Vorteil gegenüber linienförmigen Streifen ist insbesondere, dass die einzelnen Hohlraumzellen zwischen den punktförmigen Stützstellen bereits unmittelbar ohne zusätzliche Abstandshalter kommunizierend miteinander verbunden sind und eine solche Wechsel-Struktur eine große Stabilität aufweist.

Die ausgeformten Vertiefungen der ersten Platte und die korrespondierenden ausgeformten Erhebungen der zweiten Platte sind voneinander weggerichtet und bilden somit die Vielzahl von evakuierbaren Hohlraumzellen zwischen den Stützstellen, wobei die Hohlraumzellen kommunizierend miteinander verbunden sind, um gemeinsam den zu evakuierenden Gesamt-Hohlraum zu bilden.

Die Erhebungen und Vertiefungen beider Platten sind dabei zweidimensional kuppelartig aus der jeweiligen Platte ausgeformt und die kuppelartigen Erhebungen und kuppelartigen Vertiefungen sind in beiden Dimensionen der Plattenebene abwechselnd angeordnet, derart dass die kuppelartigen Erhebungen an allen vier Seiten bzw. in beiden Dimensionen der Plattenebene beidseitig jeweils unmittelbar von kuppelartigen Vertiefungen umgeben sind. Entlang einer hypothetischen Linie über die Gipfel der kuppelartigen Erhebungen wechseln sich demnach Erhebungen und Vertiefungen ab und zwar in beiden zueinander senkrechten Dimensionen der Plattenebene, ähnlich wie bei einer Waffel.

Insbesondere bilden auch die Vertiefungen der unteren ersten Platte und die korrespondierenden Erhebungen der oberen zweiten Platte aus dem Plattenmaterial ausgeformte Punktstellen, zwischen denen jeweils eine der Hohlraumzellen gebildet wird. Dadurch befindet sich bei beiden geformten Platten zwischen zwei benachbarten Erhebungen jeweils ein Tal, welches einen Sattelpunkt bildet. Die Sattelpunkte werden also in einer Dimension der Plattenebene beidseitig von Erhebungen und in der dazu senkrechten Dimension der Plattenebene beidseits von Vertiefungen umgeben.

Insbesondere weisen die geformten Platten eine im Wesentlichen gleichmäßige Dicke auf, indem die Vertiefungen der einen Seite einer Platte gleichzeitig die Erhöhungen der anderen Seite dieser Platte bilden.

Um eine gute Wärmeisolierung zu entfalten, wird der Hohlraum oder werden die Hohlräume evakuiert. Das Kollabieren des Vakuum-Isolierelements durch Anlegen eines Vakuums wird dabei vorteilhafter Weise durch die Strukturierung der geformten Platten verhindert. Die geformten Platten sind daher vorzugsweise so konstruiert, dass sie den nach der Evakuierung auf dem Vakuum-Isolierelement lastenden Atmosphärendruck so auf die geformten Platten verteilt, dass die vorgegebene Struktur erhalten bleibt bzw. sich nicht wesentlich zusammendrückt. Da sich die Form des Vakuum-Isolierelements durch die Evakuierung nur minimal ändert, können vorteilhafter Weise Vakuum-Isolierelemente mit sehr genau definierten Abmessungen hergestellt werden.

Insbesondere werden in diesem Zusammenhang Strukturen für die geformten Platten bevorzugt, die sich an aus der Architektur bekannten Statiklösungen für Gewölbe orientieren. Eine besonders bevorzugte Weiterbildung der Erfindung sieht daher vor, dass die zwischen den abgestützten Bereichen befindlichen Hohlraumzellen von einer kuppelartigen Struktur bzw. einer gewölbeartigen Versteifungsstruktur gebildet werden. Die abgestützten Bereiche bilden dabei die Säulen, die die Kuppeln tragen. Die Platten weisen demnach eine Struktur aus zweidimensional sich abwechselnd in entgegengesetzte Richtungen wölbenden Kuppeln auf; anders ausgedrückt besitzen sie also eine Eierkarton-artige Struktur. Derartige geformte Platten werden teilweise auch als Noppenplatten bezeichnet.

Die geformten Platten können auch brückenartige Strukturelemente aufweisen, die die Stabilitätsanforderungen erfüllen. Die sich gegeneinander abstützenden Strukturelemente, bilden dabei die Pfeiler dieser "Brücken" und die dazwischen liegenden Hohlraumzellen sind als "Bogenkonstruktionen" ausgeführt.

Insbesondere können auch die Pfeiler mittels Bogenkonstruktionen miteinander verbunden sein, wobei die Pfeiler Ausgangspunkt für mehrere, beispielsweise senkrecht zueinander orientiere Brücken sind, und die Brücken als tragende Basis für eine zwischen den Brücken aufgespannte Gewölbekonstruktion dienen.

Eine bevorzugte Weiterbildung der Erfindung sieht vor, dass die Vakuum-Isolierelemente nach Bedarf evakuiert und auch wieder belüftet werden können. Dies lässt sich z.B. dadurch realisieren, dass Ventile zum Einsatz kommen. Wird eine solche Weiterbildung beispielsweise für die Isolierung von Gebäuden oder auch Gewächshäusern verwendet, kann in dem Gebäude vorteilhafter Weise eine Vakuumpumpe installiert sein, mit der die Vakuum-Isolierelemente nach Bedarf evakuiert werden, wenn eine Isolierwirkung erwünscht ist. Ist die Isolierwirkung nicht erwünscht, beispielsweise wenn Wärmekonvektion bei Sonneneinstrahlung genutzt werden soll, können die Vakuum-Isolierelemente wieder belüftet werden.

Ist andererseits eine solche variable Isolierung nicht notwendig, insbesondere wenn die erfindungsgemäßen Vakuum-Isolierelemente eine permanente Isolierwirkung haben sollen, wie das beispielsweise bei Kühlgeräten der Fall ist, kann auf den Einbau von vergleichsweise teuren Ventilen samt Vakuumpumpe verzichtet werden. Eine weitere vorteilhafte Weiterbildung der Erfindung sieht für solche Fälle die Ausformung eines integral angeformten Absaugstutzens an zumindest einer der Platten vor, der nach erfolgter Evakuierung dauerhaft verschlossen werden kann.

Um eine einfache und schnelle Evakuierung der einzelnen Vakuum-Isolierelemente zu gewährleisten, weisen die geformten Platten oder die einzelne geformte Platte, die sich zwischen den randständigen Platten befinden, jeweils zumindest eine Öffnung auf, die das gleichzeitige Evakuieren aller Hohlräume, die sich jeweils zwischen benachbarten Platten eines Vakuum-Isolierelements befinden, erlaubt, wobei nur ein Ventil bzw. ein integral ausgeformter Absaugstutzen pro Vakuum-Isolierelement benötigt wird.

Die geformten Platten, aus denen das Vakuum-Isolierelement aufgebaut ist, können zum einen aus Kunststoffplatten tiefgezogen oder auch einstückig spritzgeformt sein, was den Vorteil von günstigen Ausgangsmaterialien mit vergleichsweise unaufwendigen Herstellungsmethoden verbindet. Als besonders geeignet haben sich in diesem Zusammenhang PMMA, PVC, PETG, Polycarbonat, Epoxid, Polyester, Polyethylen, Polystyrol,Glasfaserkunststoffe und Mischungen aus diesen Materialien erwiesen.

Es sind jedoch auch Sandwich-Strukturen möglich, bei denen die Platten aus verschiedenen Lagen bestehen. Das ist insbesondere dann von Vorteil, wenn Materialien verwendet werden sollen, die nur teilweise, d.h. für bestimmte Gase, gasdicht sind. Eine solche Kombination von Materialien kann beispielsweise PET und Polyethylen umfassen. Auch die Bedampfung oder die Kaschierung von Kunststoffplatten mit dünnen metallischen Schichten oder Metallfolien oder auch gegebenenfalls eine Epoxidbeschichtung kann die Dichtigkeit von Kunststoffen im Allgemeinen verbessern. Das Bedampfen mit metallischen Schichten kann auch der zumindest teilweisen Reflexion von infraroter Wäremstrahlung dienen und so die Isolierwirkung des Vakuum-Isolierelements unterstützten. Besonders kostengünstig ist beispielsweise die Verwendung von Polystyrol-Platten, die mit einem Metall-haltigen Epoxid versiegelt werden.

Außerdem sind auch dünne glasartige, glaskeramische oder keramische geformte Platten verwendbar, die für die Gasdichtigkeit mit einem oder mehreren der oben genannten Kunststoffe beschichtet sind. Auch metallische Beschichtungen sind in diesem Zusammenhang denkbar. Die genannten Materialien haben den Vorteil, dass kostengünstig großen Mengen hergestellt werden können.

Darüber hinaus können die geformten Platten, unabhängig von ihrem Ausgangsmaterial, lackiert werden, nicht nur um die Dichtigkeit gegen Gasdurchtritt zu gewährleisten, sondern auch um ästhetischen Ansprüchen Rechnung zu tragen.

Kunststoff ist ein besonders bevorzugtes Material, weil seine Eigenschaften in Bezug auf die vorliegende Erfindung vorteilhaft sind. Wichtig in diesem Zusammenhang ist das geringe Gewicht bei gleichzeitig hoher Stabilität durch die erfindungsgemäße Konstruktion. Die erfindungsgemäßen Vakuum-Isolierelemente haben damit im Vergleich zu aus dem Stand der Technik bekannten Isolierelementen ein sehr geringes Gewicht. Dieses geringe Gewicht des Ausgangsmaterials Kunststoff kommt aufgrund der integral ausgeformten Strukturelemente besonders zur Geltung. Viele Isolierelemente, die aus dem Stand der Technik bekannt sind, verwenden Füllstoffe verschiedenster Art, um das Kollabieren des Isolierelements beim Evakuieren zu vermeiden. Diese Füllstoffe können in beträchtlichen Mengen benötigt werden und führen so dazu, dass die fertigen Vakuum-Isolierelemente ein nicht unbeträchtliches Gewicht aufweisen. Dies ist aber beispielsweise mit Blick auf die Isolierung von Fassaden nachteilig, weil die Vakuum-Isolierelemente dann auf einen entsprechend tragfähigen Unterbau aufgebracht werden müssen. Auf derartige Füllstoffe zum Ausfüllen und Stabilisieren des Hohlraums kann erfindungsgemäß verzichtet werden. Durch das vergleichsweise geringe Gewicht des Vakuum-Isolierelements lässt sich daher in vorteilhafter Weise eine Leichtbauweise realisieren, die weniger aufwendige Unterbau- und Sicherungsmaßnahmen erfordert als dies bei herkömmlichen Isolierelementen der Fall ist.

Darüber hinaus können transparente Kunststoffe verwendet werden, so dass die erfindungsgemäßen Vakuum-Isolierelemente lichtdurchlässig sind und somit der Einsatz in Bereichen ermöglicht ist, in denen Lichtdurchlässigkeit gefordert ist. Dabei ist beispielsweise an die Isolierung von Oberlichtern oder aber auch Gewächshäusern gedacht.

Weiterhin haben Kunststoffe den Vorteil, dass sie bei geringem Gewicht eine hohe Stabilität aufweisen können. Es lassen sich schon mit relativ geringen Plattenstärken im Bereich von < 2 mm bis 5 mm, bevorzugt 0,5 mm bis 3 mm, stabile und auch relativ robuste Vakuum-Isolierelemente herstellen. Geringe Materialstärken sind aber nicht nur in Hinblick auf ein geringes Gewicht vorteilhaft, sondern ermöglichen auch eine kostengünstigere Herstellung.

Gemäß einer anderen vorteilhaften Weiterbildung können die geformten Platten auch aus Metallblechen, vorzugsweise Edelstahl aufgrund seiner geringen Wärmeleitfähigkeit, hergestellt werden. Diese Ausführungsform bietet sich an, wenn die Stabilität der Vakuum-Isolierelemente im Vordergrund steht.

Bestehen die geformten Platten des erfindungsgemäßen Vakuum-Isolierelements aus Kunststoff, können sie an den ausgeformten umlaufenden Dichtflächen einfach miteinander verklebt oder verschweißt werden, wobei sie in ihrer Gesamtheit einen Dichtrahmen ausbilden. Dabei sind, ohne Beschränkung der Allgemeinheit, Ultraschall-Schweißen, thermisches Verbinden im Allgemeinen oder auch Lösungsmittelschweißen geeignete Methoden. Bestehen die geformten Platten aus Metallblech, werden sie entlang des Dichtrahmens vorzugsweise miteinander verschweißt, hartverlötet oder weichverlötet. Vorteilhafter Weise sind alle diese Verfahren einfach zu realisieren, wobei der Fachmann über die nötigen Kenntnisse verfügt, wie eine luftdichte Verbindung der einzelnen Platten miteinander gewährleistet werden kann.

Bei evakuierten Isolierungen ist die dauerhafte Aufrechterhaltung des Vakuums Voraussetzung dafür, dass die Isolierung langfristig ihren Zweck erfüllt. Dieses Problem ist besonders dann schwierig zu lösen, wenn, wie im Stand der Technik häufig der Fall, die Außenhaut der einzelnen Vakuum-Isolierelemente verletzlich ist. Aus dem Stand der Technik sind beispielsweise Isolierelemente bekannt, die aus einem mit Metallfolie ummantelten Styropor- oder Schaumstoffkern bestehen, dessen Porenraum evakuiert wird. Um Gewicht zu sparen ist die verwendete Metallfolie häufig sehr dünn, so dass die Außenhaut verletzlich ist und die Isolierelemente aufwendig in ausgeschäumte Halterungen eingebracht werden müssen.

In einer besonders bevorzugten Weiterbildung der Erfindung weist das Vakuum-Isolierelement ein oder mehrere ausgeformte Einbauränder auf, mit deren Hilfe das Vakuum-Isolierelement am zu isolierenden Objekt oder auch an einer Rahmenkonstruktion befestigt werden kann. Die integral ausgeformten Einbauränder vermeiden, dass umständliche Konstruktionen benötigt werden, um die Isolierelemente sicher, aber auch verletzungsfrei anbringen zu können. So können die erfindungsgemäßen Einbauränder selber als Halterung ausgestaltet sein, so dass die Vakuum-Isolierelemente vorteilhafter Weise direkt an dem zu isolierenden Objekt angebracht, beispielsweise an eine Wand angeschraubt, werden können.

Eine weitere bevorzugte Weiterbildung der Erfindung weist daher einen oder mehrere solcher ausgeformter Einbauränder auf, die über die am weitesten nach außen vorstehenden Strukturelemente hinausragen. Eine solche Konstruktion ermöglicht zum einen die Montage der Einbauelemente direkt an dem zu isolierenden Objekt, verhindert aber andererseits den flächigen Kontakt zwischen Isolierung und zu isolierendem Objekt. Diese Ausgestaltung hat den Vorteil, dass der Kontakt zwischen Objekt und Isolierung stark eingeschränkt ist und dadurch der Wärmefluss zwischen beiden Objekten zusätzlich begrenzt und die Isolierwirkung verstärkt wird.

Über zusätzliche ausgeformte Einbauränder, die bevorzugt auf der der Montageseite entgegengesetzten Seite über die am weitesten nach außen vorstehenden Strukturelemente hinausragen, kann eine Verkleidung oder Abdeckung angebracht werden. Diese kann zum einen einfach dem Sichtschutz dienen, andererseits aber auch so ausgestaltet sein, dass sie eine Unterlage für weitergehende Maßnahmen darstellt. In diesem Zusammenhang ist beispielsweise an eine Unterlage für das Aufbringen von Verputz gedacht.

Sollen die Vakuum-Isolierelemente nicht aufwendig verkleidet werden, beispielsweise, wenn Lichtdurchlässigkeit gefordert ist, können auf eine oder auch auf beide randständigen geformten Platten des Vakuum-Isolierelements - gegebenenfalls transparente - Abdeckplatten oder Abdeckfolien aufgebracht werden. Diese Abdeckungen erleichtern das Sauberhalten der strukturierten Oberflächen der Vakuum-Isolierelemente. Insbesondere bevorzugt wird die Abdeckung luftdicht mit der nach außen weisenden Oberfläche der randständigen Platte verbunden, um optische Einbußen durch das Eindringen kleiner Staubpartikel zwischen Vakuum-Isolierelement und Abdeckung zu vermeiden.

Eine weitere bevorzugte Ausführungsform der Erfindung ermöglicht die Befestigung des Vakuum-Isolierelements mittels geeigneter Befestigungsmittel durch durchgehende Öffnungen hindurch, die sich durch den Hohlraum erstrecken. Eine solche Befestigungsstruktur kann z.B. durch integral ausgeformte Röhrchen, die durch das fertige Isolierelement hindurch verlaufen realisiert sein. Die ausgeformten Röhrchen können aus unterschiedlichen Rohrabschnitten zusammengesetzt sein, wobei die einzelnen Rohrabschnitte aus den geformten Platten, durch die sie verlaufen, ausgeformt sind. Beispielsweise können bei einem dreischichtigen Aufbau die Rohrabschnitte einer ersten und einer zweiten Platte, die in diesem Bereich eine Hohlraumzelle bilden, dreidimensional röhrchenförmig sein, während der Rohrabschnitt einer dritten Platte, die mit der zweiten Platte über eine Stützstelle mit einer punktförmigen Berührungsfläche in Berührung kommt, nur aus einem Loch in der Platte besteht. Setzt man diese drei Abschnitte zusammen, so ergibt sich ein durch das Vakuum-Isolierelement verlaufendes Röhrchen, durch das das Vakuum-Isolierelement, beispielsweise an einer Wand festgeschraubt werden kann. Die zusammengesetzten Röhrchenabschnitte werden dabei luftdicht miteinander verbunden, so dass das in den Hohlräumen zwischen den einzelnen geformten Platten befindliche Vakuum nicht belüftet wird.

Gemäß einer weiteren vorteilhaften Weiterbildung des erfindungsgemäßen Vakuum-Isolierelements sind Berührungsflächen der sich gegeneinander abstützenden Erhebungen und Vertiefungen der geformten Platten im evakuierten Zustand möglichst klein, da auf diese Weise der Wärmeübertrag zwischen benachbarten Platten minimiert wird. Besonders bevorzugt sind daher punktförmige Berührungsflächen mit einem Durchmesser von bevorzugt kleiner als 10 mm, besonders bevorzugt kleiner als 5 mm.

In besonders einfacher und ökonomischer Weise lässt sich ein erfindungsgemäßes Vakuum-Isolierelement herstellen, indem identisch strukturierte geformte Platten verwendet werden. Da diese Platten identisch strukturiert sind, können sie spiegelsymmetrisch übereinander gestapelt werden. Damit jeder Erhebung einer ersten geformten Platte eine Vertiefung einer zweiten geformten Platte gegenüberliegt und sich die Strukturelemente zweier benachbarter Platten gegeneinander abstützen können, müssen die Platten so angeordnet werden, dass der Oberseite der ersten Platte die Oberseite der zweiten Platte und der Unterseite dieser zweiten Platte die Unterseite einer dritten Platte usw. zugewendet ist.

In einer bevorzugten Weiterbildung der Erfindung sind die Strukturelemente als Pyramiden geformt, deren Spitzen abwechselnd nach oben oder unten zeigen.

Bei einer sehr stabilen Ausführungsform der Erfindung bestehen die geformten Platten aus Reihen von vierseitigen Pyramiden mit einer vorzugsweise quadratischen Grundfläche. Eine einzelne Pyramidenreihe besteht dabei aus Pyramiden, deren Spitzen abwechselnd nach oben oder nach unten zeigen und die sich an gegenüberliegenden Seiten der Grundfläche berühren. Eine geformte Platte besteht erfindungsgemäß aus mehreren solchen Pyramidenreihen, wobei die Pyramidenreihen so gegeneinander verschoben angeordnet sind, dass die Spitzen benachbarter Pyramiden in unterschiedliche Richtungen weisen und ihre Grundflächen in einer Ebene liegen. So geformte Platten lassen sich wie oben beschrieben spiegelsymmetrisch übereinander legen und erfindungsgemäß miteinander verbinden. In dem fertigen Vakuum-Isolierelement stützen sich dann die Spitzen der Pyramiden benachbarter geformter Platten gegeneinander ab und verleihen dem Vakuum-Isolierelement so seine Stabilität gegenüber dem Atmosphäredruck der Umgebung bei erfolgter Evakuierung.

Die spiegelsymmetrische Anordnung von identisch geformten Platten kann auch als Abfolge von "normal", "invers", "normal" gelagerten Platten beschrieben werden. Sie führt zu einer charakteristischen Anordnung der Hohlräume, die durch die vorgegebene Struktur ebenfalls identisch sind, jedoch durch die spiegelsymmetrische Lagerung gegeneinander versetzt sind. Zeigen auch die Strukturelemente der geformten Platten eine regelmäßige Anordnung, wie beispielsweise die oben beschriebene Pyramidenform, lassen sich lückenlos aneinanderlegbare Körper herstellen, die eine besonders gute Stabilität aufweisen.

Damit die Struktur des Vakuum-Isolierelements nach dem Evakuieren stabil und formtreu ist und die geformten Platten sich nicht unerwünschter Weise gegeneinander verschieben und "zusammenrutschen", erfordert das Zusammensetzen des Vakuum-Isolierelements einige Präzision. Erhebungen und Vertiefungen zweier benachbarter geformter Platten müssen genau übereinander zu liegen kommen. Diese Genauigkeit kann durch das Einfügen einer erfindungsgemäßen Zwischenschicht entschärft werden, und das "Zusammenrutschen" der geformten Platten beim Anlegen des Vakuums verhindert werden. Eine weitere bevorzugte Ausführungsform des erfindungsgemäßen Vakuum-Isolierelements weist daher jeweils zwischen zwei benachbarten geformten Platten eine luftdurchlässige, vorzugsweise ebene, Zwischenplatte auf, die die Evakuierung nicht behindert, aber die Fertigungstoleranzen erhöht.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsformen miteinander kombiniert werden können.

### Kurzbeschreibung der Figuren

Es zeigen:
- Fig. 1: eine teilweise aufgebrochene perspektivische Ansicht einer zweischichtigen Ausführungsform des erfindungsgemäßen Vakuum-Isolierelements
- Fig. 2: einen Querschnitt durch ein Vakuum-Isolierelement wie in Fig. 1 dargestellt
- Fig. 3: eine teilweise aufgebrochene perspektivische Ansicht eines dreischichtigen Vakuum-Isolierelements
- Fig. 4: eine teilweise aufgebrochene perspektivische Ansicht eines dreischichtigen Vakuum-Isolierelements, angebracht an einer Fassadenwand
- Fig. 5: Detailansicht aus Fig. 4 - Befestigung an der Fassadenwand
- Fig. 6: Querschnitt durch den Wand- und Boden-Aufbau eines Thermofahrzeugaufbaus, der mit dreischichtigen Vakuum-Isolierelementen gedämmt ist
- Fig. 7: Querschnitt durch ein dreischichtiges Vakuum-Isolierelement mit Scharnier
- Fig. 8: Fotografie eines Vakuum-Isolierelements mit pyramidenförmigen Strukturelementen - nicht evakuiert
- Fig. 9: Fotografie des Vakuum-Isolierelements aus Fig. 8 - evakuiert
- Fig. 10: Fotografie einer Vergleichsanordnung, wobei eine Platte pyramidenförmige Strukturelemente aufweist und die zweite Platte ungeformt ist - nicht evakuiert
- Fig. 11: Fotografie der Vergleichsandordnung aus Fig. 10 - evakuiert.

### Detaillierte Beschreibung der Erfindung

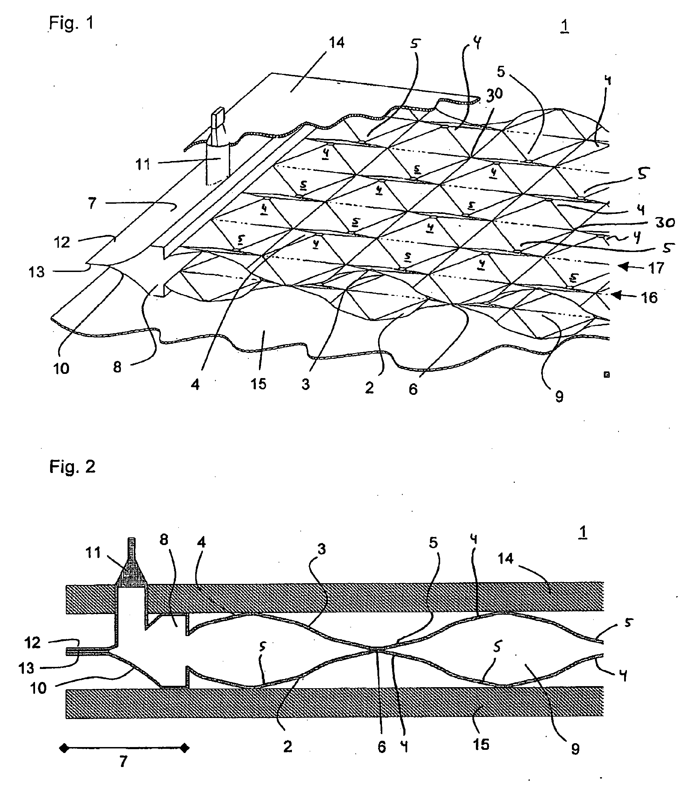

In Fig. 1 ist eine teilweise aufgebrochene perspektivische Ansicht eines erfindungsgemäßen Vakuum-Isolierelements. 1 dargestellt, während Fig. 2 ein identisch aufgebautes Vakuum-Isolierelement 1 im Querschnitt zeigt. Das Vakuum-Isolierelement 1 ist aus zwei geformten Platten 2, 3 aufgebaut, die spiegelsymmetrisch übereinander angeordnet sind. Die geformten Platten 2, 3 stützen sich punktuell gegeneinander ab, indem jeweils eine ausgeformte Erhebung 4 der unteren Platte 2 sich unmittelbar gegen eine ausgeformte Vertiefung 5 der oberen Platte 3 abstützt, wobei sich im Wesentlichen punktförmige Berührungsflächen 6 zwischen der unteren geformten Platte 2 und der oberen geformten Platte 3 ergeben, welche das Punkt-Raster von Stützstellen bilden.

Das Vakuum-Isolierelement 1 weist einen umlaufenden Randbereich 7 auf, der sich radial in mehrere Bereiche untergliedert. Direkt anschließend an die pyramidenförmigen Strukturen 7 befindet sich ein umlaufender Rahmen 8, der eine gleichmäßige Evakuierung der Hohlraumzellen 9, zwischen den beiden geformten Platten 2, 3 ermöglicht. An den umlaufenden Rahmen schließt sich ein Biegungsbereich 10 an, der zur Höhenvermittlung zwischen den beiden geformten Platten 2, 3 dient. Ein integral ausgeformter Absaugstutzen 11 zum Evakuieren der Hohlraumzellen 9 ist im Biegungsbereich 10 eingesetzt. Ein Dichtrahmen 12 entsteht durch die Zusammenführung der beiden geformten Platten 2, 3, die entlang der umlaufenden Dichtfläche 13 luftdicht miteinander verklebt sind. Die Mehrschichtanordnung, bestehend aus den beiden geformten Platten 2, 3, ist sowohl oben als auch unten von Abdeckplatten 14, 15 abgedeckt, wobei der Raum zwischen der Mehrschichtanordnung und den Abdeckplatten 14, 15 nicht evakuiert ist.

Die geformten Platten 2, 3 zeigen eine pyramidenartige Struktur, wobei die einzelnen Pyramiden vierseitig sind, d.h. sie weisen vier Pyramidenseiten und eine quadratische Grundfläche auf. Die Spitzen der Pyramiden sind abgeflacht. Die einzelnen geformten Platten 2, 3 sind aus Pyramidenreihen 16, 17 aufgebaut. Die Pyramiden berühren sich dabei an gegenüberliegenden Seiten ihrer Grundflächen, die sich in einer Ebene befinden. Die Spitzen der Pyramiden einer Pyramidenreihe 16, 17 sind abwechselnd nach oben und nach unten ausgerichtet, so dass sich eine Abfolge von Pyramiden in einer Reihe ergibt, wobei nach einer Pyramide, deren Spitze nach oben ausgerichtet ist, eine Pyramide, deren Spitze nach unten weist usw. folgt. Benachbarte Pyramidenreihen 16, 17 sind jeweils um eine Pyramidengrundfläche versetzt, so dass eine Pyramide einer ersten Pyramidenreihe 16 deren Spitze nach oben gerichtet ist, neben einer Pyramide einer zweiten Pyramidenreihe 17 angeordnet ist, deren Spitze nach unten weist. Anders ausgedrückt, ist eine Pyramide entlang der Kanten ihrer Grundfläche von Pyramiden mit entgegengesetzter Ausrichtung umgeben. Zwischen zwei Erhebungen 4 befindet sich jeweils ein Tal mit einem Sattelpunkt 30.

Die Pyramiden der geformten Platten 2, 3 stellen ihre Strukturelemente dar, wobei Pyramiden mit nach oben weisender Spitze Erhebungen 4 und Pyramiden, deren Spitzen nach unten weisen Vertiefungen 5 entsprechen. In zusammengebautem und evakuiertem Zustand stützen sich die Erhebungen 4 der geformten Platte 2 gegen Vertiefungen 5 der geformten Platte 3 ab. Aus dieser Konstruktion ergibt sich eine Statik, die den von außen auf dem Vakuum-Isolierelement lastenden Atmosphärendruck so über die geformten Platten 2, 3 verteilt, dass das Vakuum-Isolierelement auch im evakuierten Zustand nicht kollabiert. Bevorzugt sind in diesem Zusammenhang kuppelartige Strukturelemente, die auch in dieser pyramidenartigen Struktur realisiert sind.

Zwischen den abgestützten Bereichen, die sich aus den Erhebungen 4 und den Vertiefungen 5 ergeben, befinden sich einzelne, miteinander verbundene Hohlraumzellen 9, die in ihrer Gesamtheit, d.h. der Gesamtheit zwischen zwei benachbarten Platten 2, 3 einen Hohlraum ausbilden.

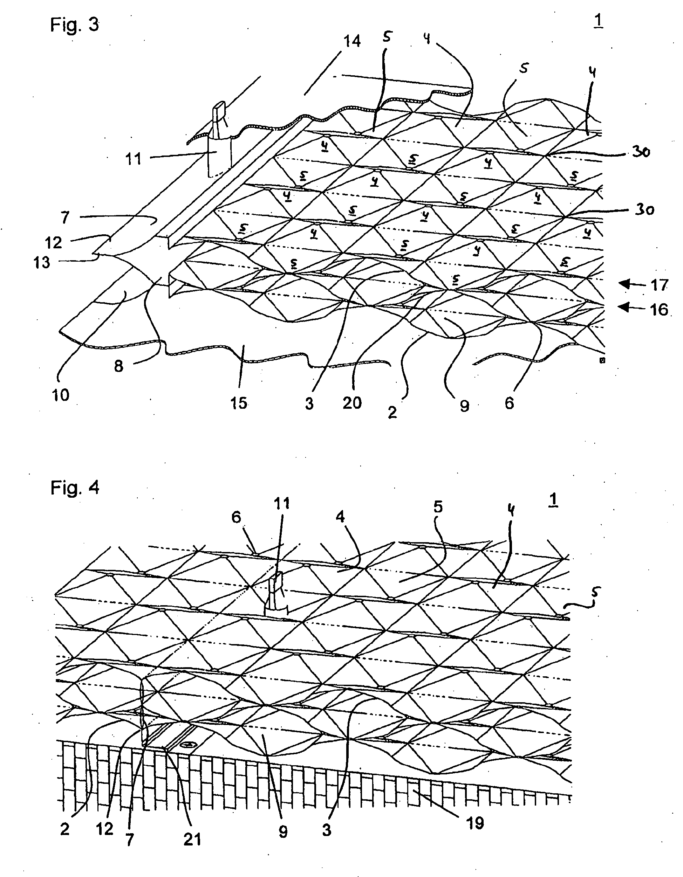

In Fig. 3 ist ein dreischichtiges Vakuum-Isolierelement 1 aus geformten Platten 2, 3, deren Struktur identisch zu den in Fig. 1 und 2 beschriebenen geformten Platten 2, 3 ist, dargestellt.

Anders als in den Fig. 1 und 2 sind hier jedoch drei geformte Platten 2, 3, 20 spiegelsymmetrisch übereinander angeordnet. Unter spiegelsymmetrisch wird in diesem Zusammenhang eine "normale" Lagerung der unteren Platte 2, eine "inverse" Lagerung der mittleren Platte 20 und wieder eine "normale" Lagerung der obersten Platte 3 verstanden. Das hat zur Folge, dass die untere Platte 2 und die obere Platte 3 parallel angeordnet sind.

Figur 4 zeigt ein dreischichtiges Vakuum-Isolierelement 1, wie in der Beschreibung zu Fig. 3 dargestellt, als Fassadenverkleidung. Die Abbildung ist zum besseren Verständnis teilweise aufgebrochen.

Abweichend von der in Fig. 3 beschriebenen Ausführungsform ist der Absaugstutzen 11 zur Evakuierung des Vakuum-Isolierelements 1 nicht in den umlaufenden Randbereich 7 integriert, sondern befindet sich in einer Vertiefung 4 der geformten Platte 3. Der umlaufende Randbereich 7 ist in dieser bevorzugten Ausführungsform in etwa senkrecht zur Längserstreckung der geformten Platten 2, 3 abgebogen, damit sich zwei erfindungsgemäße Vakuum-Isolierelemente 1 lückenlos nebeneinander anordnen lassen. Der Rahmenbereich 7 erstreckt sich an der Unterseite des Vakuum-Isolierelements 1 über die am weitesten nach außen vorstehenden Strukturelemente, also die Vertiefungen 5 der unteren geformten Platte 2, hinaus und bildet dort einen ausgeformten Einbaurand 18 aus.

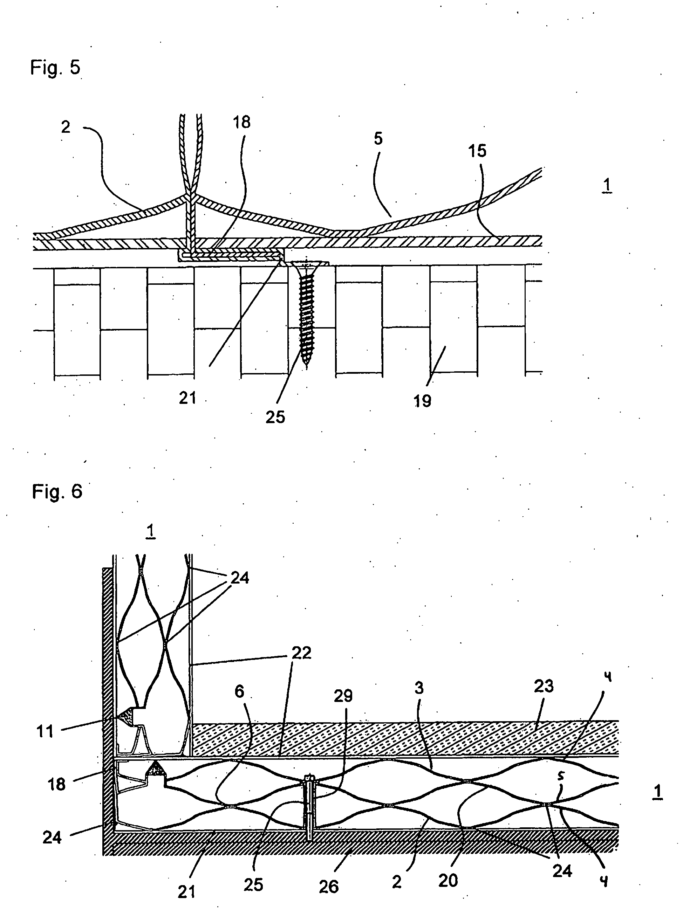

Der ausgeformte Einbaurand 18 dient der Befestigung des Vakuum-Isolierelements 1 an der Fassadenwand 19. Wie in Fig. 5 im Detail dargestellt, weisen die Vakuum-Isolierelemente 1 oben und unten jeweils abgewinkelte Einbauränder 18 auf, die jeweils oben und unten in eine Steckleiste 21, die mit Hilfe von Schrauben 25 an der Fassadenwand festgeschraubt ist, eingehängt werden können. Es versteht sich aber, dass jede andere geeignete Befestigung ebenfalls möglich ist.

Der Einbaurand 18 ist so ausgeformt, dass das Vakuum-Isolierelement 1 mit der zu isolierenden Fassadenwand 19 nur über den Einbaurand 18 bzw. die Steckleiste 21 in Berührung kommt. Die anderen Bereiche des Vakuum-Isolierelements 1 berühren die Fassadenwand 19 gar nicht. Eine solche Anordnung vermindert einen eventuellen Wärmeübertrag zwischen Vakuum-Isolierelement 1 und Fassadenwand 19 und dient somit der Verbesserung der Isolierwirkung.

Figur 6 zeigt einen Querschnitt durch dreischichtige Vakuum-Isolierelemente 1, wie sie für Thermoaufbauten von Lastkraftwagen geeignet sind. Diese Ausführungsform kann auch für die Isolierung von Containern verwendet werden, die temperaturgeführte Transporte ermöglichen.

Die dreischichtigen Vakuum-Isolierelemente 1 bestehen, wie in Fig. 3 beschrieben, aus drei geformten Platten 2, 3, 20, die jedoch einen abweichend geformten Einbaurand 18 aufweisen. Der in dieser Abbildung gezeigte Einbaurand 18 verläuft in diesem Beispiel zweckmäßigerweise senkrecht zur Plattenebene und ist so geformt, dass er eine möglichst große Berührungsfläche zu der Stirnseite der Rahmenkonstruktion aufweist, mit der er verklebt ist. Um die Vakuum-Isolierelemente möglichst dauerhaft mit der Unterkonstruktion, in diesem Fall ein U-Träger 26, zu verbinden, sind zum einen alle Vertiefungen der geformten Platte 2 und alle Erhebungen der geformten Platte 3 mit der Rahmenkonstruktion 22 aus Glasfaser-verstärkten Kunstoffplatten sowie die geformten Platten untereinander an den punktförmigen Berührungsflächen miteinander verklebt (Verklebung 24).

Zusätzlich zu der Verklebung ist das im Boden eingebaute Vakuum-Isolierelement 1 mittels einer Schraube 25 an der Unterkonstruktion des Bodens, einem U-Träger 26, fest verschraubt, wobei die Schraube 25 durch ein Röhrchen 29 des Vakuum-Isolierelements 1 gesteckt ist. Das Röhrchen 29 ist ein zusammengesetztes Element, wobei die einzelnen Röhrchenabschnitte oder Röhrchenbestandteile ausgeformte Teile der drei geformten Platten, 2, 3, 20 sind, die, miteinander verbunden, ein durch das Vakuum-Isolierelement 1 durchgehendes Röhrchen 29 bilden. Die miteinander verklebten oder verschweißten Röhrchenabschnitte sind vakuum-dicht miteinander verbunden, so dass ein dauerhaftes Vakuum im Vakuum-Isolierelement 1 erzeugt werden kann. Auf der Rahmenkonstruktion 21 des Bodens ist zusätzlich noch ein Bodenbelag 23 aufgebracht.

Das dreischichtige Vakuum-Isolierelement 1 in Fig. 6 ist dauerhaft eingebaut und weist deshalb einen integral ausgeformten Absaugstutzen 11 auf. Die Vakuum-Isolierelemente 1 sind in evakuiertem Zustand dargestellt, wobei die Absaugstutzen dauerhaft verschweißt sind.

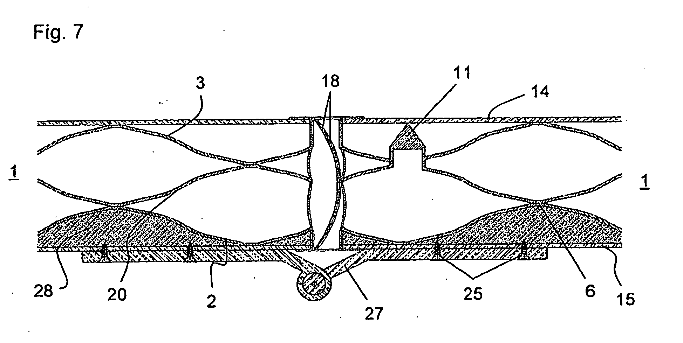

Figur 7 zeigt im Querschnitt zwei erfindungsgemäße dreischichtige Vakuum-Isolierelemente 1, die gegeneinander beweglich auf einem Scharnier 27 angebracht sind. Die Vakuum-Isolierelemente 1 sind mit dem Scharnier 27 über Schrauben 25 fest verbunden, wobei, zur Verbesserung der Stabilität, die Zwischenräume zwischen den Vakuum-Isolierelementen 1 und den unteren Abdeckplatten 15 mit einem PU-Schaum 28 ausgeschäumt sind. Die Einbauränder 18 der beiden Vakuum-Isolierelemente 1 dienen in dieser Ausführungsform der Herstellung einer lückenlosen Oberfläche, wenn das Scharnier 27, so wie in der Abbildung gezeigt, nicht abgewinkelt ist. Wird das Scharnier 27 dagegen in eine abgewinkelten Position bewegt, führen die aneinander angepassten Rundungen der Einbauränder 18 der beiden Vakuum-Isolierelemente 1 zu einem reibungslosen Auseinandergleiten entlang der ausgeformten Einbauränder 18.

Auf Scharniere montierte Vakuum-Isolierelemente 1, wie sie in Fig. 7 dargestellt sind, können als Sektionaltore, beispielsweise für große Fertigungshallen oder ähnliches, Verwendung finden. Die Stirnseiten können dabei von der Senkrechten abweichen, und können z.B. wie in Fig. 7 dargestellt, rund, aber auch schräg ausgebildet sein.

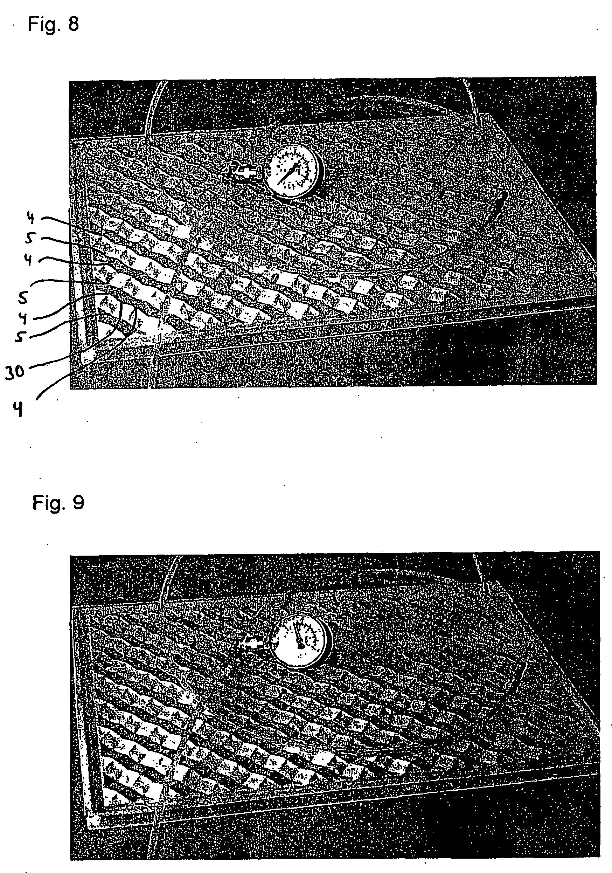

Die Fig. 8 und 9 zeigen Fotografien von erfindungsgemäßen zweischichtigen Vakuum-Isolierelementen 1, die pyramidenartig strukturiert und spiegelsymmetrisch zueinander angeordnet sind. Die geformten Platten wurden aus 1 mm starken Polystyrol-Platten hergestellt. In Fig. 8 wird das Isolierelement 1 in belüftetem Zustand gezeigt; das Manometer zeigt einen Druck von 0 bar an. Figur 9 zeigt das gleiche Vakuum-Isolierelement 1, jedoch in evakuiertem Zustand; das Manometer zeigt einen Unterdruck von etwa -0,9 bar an. Der Vergleich der beiden Fotografien belegt, dass das Vakuum-Isolierelement 1 auch unter Vakuum formstabil ist.

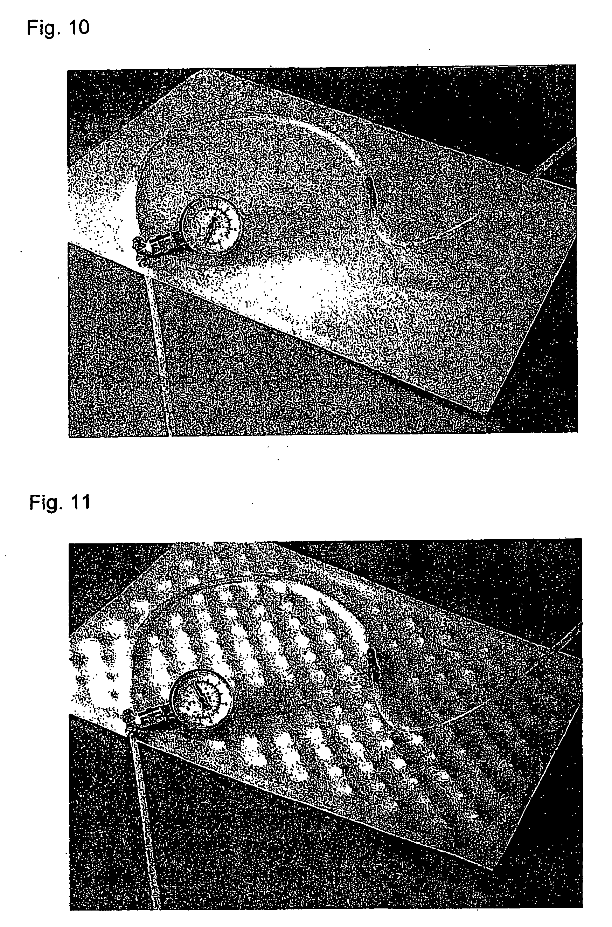

Zur Veranschaulichung der Formstabilität des erfindungsgemäßen Vakuum-Isolierelements 1, zeigen die Figuren 10 und 11 eine Vergleichsanordnung, die aus einer unteren geformten Platte und einer oberen ungeformten Platte besteht. Auch die hier verwendeten Platten bestehen aus 1 mm starkem Polystyrol. In Fig. 10 ist diese Anordnung belüftet, wie an dem "null" anzeigenden Manometer abzulesen ist. In Fig. 11 ist die selbe Anordnung in evakuiertem Zustand zu sehen; der Unterdruck beträgt etwas über -0,8 bar. Die obere ungeformte Platte ist unter Vakuum nicht formstabil geblieben, sondern hat sich durch den Unterdruck an die Form der darunter liegenden geformten Platte "angeschmiegt". Die gesamte Anordnung ist verzogen, der rechte untere Rand hat sich nach oben gebogen.

## Patentansprüche

1. Vakuum-Isolierelement (1), umfassend:
eine evakuierbare Mehrschichtanordnung, die zumindest zwei geformte Platten (2, 3) umfasst, wobei
die geformten Platten (2, 3) jeweils einen umlaufenden Randbereich (7) aufweisen, welcher jeweils eine Dichtfläche (13) bildet, wobei die Dichtflächen (13) der geformten Platten (2, 3) im zusammengebauten Zustand hermetisch miteinander verbunden sind und somit einen Dichtrahmen (12) bilden, so dass ein Hohlraum zwischen den zumindest zwei geformten Platten (2, 3) vakuumdicht versiegelt ist, und wobei
die Struktur der zumindest zwei geformten Platten (2, 3) den im evakuierten Zustand auf die Mehrschichtanordnung einwirkenden Atmosphärendruck so auf die geformten Platten (2, 3) verteilt, dass die vorgegebene Struktur stabil bleibt, wobei
die geformten Platten (2, 3) eine Vielzahl von in entgegengesetzten Richtungen aus den geformten Platten (2, 3) ausgeformten Strukturelementen in Form von wechselweisen Erhebungen (4) und Vertiefungen (5) aufweisen und
wobei die Erhebungen (4) der ersten (2) der beiden Platten und die korrespondierenden Vertiefungen (5) der zweiten (3) der beiden Platten sich gegenüberliegende aus Plattenmaterial ausgeformte Punktstellen bilden, die sich im evakuierten Zustand gegeneinander abstützen und somit ein Punkt-Raster von Stützstellen bilden und
wobei die Vertiefungen (5) der ersten Platte (2) und die korrespondierenden Erhebungen (4) der zweiten Platte (3) voneinander weggerichtet sind und eine Vielzahl von evakuierbaren Hohlraumzellen (9) zwischen den Stützstellen bilden, wobei die Hohlraumzellen (9) kommunizierend miteinander verbunden sind, um gemeinsam den Hohlraum zu bilden.

2. Vakuum-Isolierelement (1) nach Anspruch 1, **dadurch gekennzeichnet, dass** die Erhebungen (4) und Vertiefungen (5) beider Platten (2, 3) zweidimensional kuppelartig aus der jeweiligen Platte ausgeformt sind und die kuppelartigen Erhebungen (4) und kuppelartigen Vertiefungen (5) in beiden Dimensionen der Plattenebene abwechselnd angeordnet sind, derart dass den kuppelartigen Erhebungen (4) in beiden Dimensionen der Plattenebene beidseits jeweils kuppelartige Vertiefungen (5) benachbart sind.

3. Vakuum-Isolierelement (1) nach Anspruch 1 oder 2, **dadurch gekennzeichnet, dass** die kuppelartigen Vertiefungen (5) der ersten Platte (2) und die korrespondierenden kuppelartigen Erhebungen (4) der zweiten Platte (3) aus Plattenmaterial ausgeformte Punktstellen bilden zwischen denen jeweils eine der Hohlraumzellen (9) gebildet wird.

4. Vakuum-Isolierelement (1) nach einem der vorstehenden Ansprüche, **dadurch gekennzeichnet, dass** sich bei beiden geformten Platten (3, 4) zwischen zwei benachbarten Erhebungen (4) jeweils ein Sattelpunkt (30) befindet.

5. Vakuum-Isolierelement (1) nach einem der vorstehenden Ansprüche, **dadurch gekennzeichnet, dass** die evakuierbare Mehrschichtanordnung einen oder mehrere ausgeformte Einbauränder (18) aufweist, welche mit dem zu isolierenden Objekt oder einer Rahmenkonstruktion (22) verbunden werden können, so dass die Mehrschichtanordnung im eingebauten Zustand von dem Objekt oder der Rahmenkonstruktion (22) gehalten wird.

6. Vakuum-Isolierelement (1) nach einem der vorstehenden Ansprüche, **dadurch gekennzeichnet, dass** die geformten Platten (2, 3) identisch strukturiert und spiegelsymmetrisch miteinander verbunden sind.

7. Vakuum-Isolierelement (1) nach Anspruch 6, **dadurch gekennzeichnet, dass** die spiegelsymmetrisch angeordneten geformten Platten (2, 3) Strukturen aus Reihen vierseitiger Pyramiden (16, 17) mit quadratischer Grundfläche aufweisen, die sich an gegenüberliegenden Seiten der Grundflächen berühren und wobei
die Spitzen der Pyramidenreihen (16, 17) in Bezug auf die Plattenebene abwechselnd nach oben und unten zeigen und sich die Grundflächen an gegenüberliegenden Seiten berühren und
die Pyramidenreihen (16, 17) so nebeneinander angeordnet sind, dass die Spitzen der Pyramiden abwechselnd nach oben und unten zeigen und
die Grundflächen benachbarter Pyramidenreihen in einer Ebene liegen.

8. Vakuum-Isolierelement (1) nach einem der vorstehenden Ansprüche, **dadurch gekennzeichnet, dass** drei oder mehr identisch geformte Platten (2, 3, 20) spiegelsymmetrisch miteinander verbunden werden, so dass auf eine normal gelagerte geformte Platte (2) eine invers gelagerte geformte Platte (20) und auf eine invers gelagerte geformte Platte (20) eine normal gelagerte geformte Platte (3) folgt, wobei zwischen zwei benachbarten Platten jeweils ein Hohlraum gebildet wird und die übereinander liegenden Hohlräume gegeneinander versetzt sind.

9. Vakuum-Isolierelement (1) nach einem der vorstehenden Ansprüche, **dadurch gekennzeichnet, dass** die Dichtflächen (13) der geformten Platten (2, 3, 20) mit einem Klebstoff luftdicht miteinander verklebt, oder dass die geformten Platten entlang des Dichtrahmens (12) luftdicht miteinander verschweißt sind.

10. Vakuum-Isolierelement (1) nach einem der vorstehenden Ansprüche, **dadurch gekennzeichnet, dass** das Vakuum-Isolierelement (1) zumindest ein Ventil oder einen integral angeformten Absaugstutzen (11) besitzt, mit dem die miteinander verbundenen Hohlraumzellen (9) zwischen den geformten Platten (2, 3, 20) mittels einer Vakuumpumpe evakuiert oder belüftet werden können.

11. Vakuum-Isolierelement (1) nach Anspruch 7, **dadurch gekennzeichnet, dass** das Vakuum-Isolierelement (1) zumindest drei geformte Platten (2, 3, 20) umfasst, wobei die einzelne geformte Platte (20) oder mehrere geformte Platten (20), die zwischen den beiden randständigen geformten Platten (2, 3) angeordnet sind, jeweils zumindest eine Öffnung aufweisen, die das Evakuieren oder Belüften aller Hohlräume des Vakuum-Isolierelements (1) mittels eines einzigen Ventils oder eines integral geformten Absaugstutzens (11) erlauben.

12. Vakuum-Isolierelement (1) nach einem der vorstehenden Ansprüche, **dadurch gekennzeichnet, dass** zwischen den zumindest zwei geformten Platten (2, 3) eine luftdurchlässige Zwischenplatte eingefügt ist, wobei die Zwischenplatte eine höhere Fertigungstoleranz ermöglicht, da die sich gegeneinander abstützenden Erhebungen (4) und Vertiefungen (5) nicht so exakt aufeinander gesetzt werden müssen, um zu gewährleisten, dass die vorgegebene Struktur im evakuierten Zustand stabil ist.

13. Vakuum-Isolierelement (1) nach einem der vorstehenden Ansprüche, **dadurch gekennzeichnet, dass** auf eine oder beide der nach außen weisenden Oberflächen der randständigen geformten Platten (2, 3) des Vakuum-Isolierelements (1) eine Abdeckplatte (14, 15) oder eine Abdeckfolie aufgebracht ist.

14. Vakuum-Isolierelement (1) nach einem der vorstehenden Ansprüche, **dadurch gekennzeichnet, dass** ein erster ausgeformter Einbaurand (18) auf einer Seite des Vakuum-Isolierelements (1) über die am weitesten nach außen vorstehenden Strukturelemente hinausragt und mit dem zu isolierenden Objekt verbunden ist, wobei das Vakuum-Isolierelement (1) lediglich über den Einbaurand (18) mit dem zu isolierenden Objekt in Berührung kommt.

15. Vakuum-Isolierelement (1) nach einem der vorstehenden Ansprüche, **dadurch gekennzeichnet, dass** ein erster ausgeformter Einbaurand (18) auf einer Seite des Vakuum-Isolierelements (1) über die am weitesten nach außen vorstehenden Strukturelemente hinausragt und der Montage an dem zu isolierenden Objekt dient, und ein zweiter ausgeformter Einbaurand (18) auf der anderen Seite des Vakuum-Isolierelements (1) über die am weitesten nach außen vorstehenden Strukturelemente hinausragt und die Montage einer Verkleidung oder Abdeckung ermöglicht.

## Claims

1. A vacuum insulation element (1), comprising:
an evacuable multi-layered assembly that comprises at least two shaped panels (2, 3); wherein
the shaped panels (2, 3) each have a peripheral edge region (7) each of which defines a sealing surface (13), the sealing surfaces (13) of the shaped panels (2, 3) being hermetically joined to one another in the assembled state so as to form a sealing frame (12) in a manner so that a cavity between the at least two shaped panels (2, 3) is sealed vacuum-tightly; and wherein
the configuration of the at least two shaped panels (2, 3) is such that the atmospheric pressure acting on the multi-layered assembly in the evacuated state is distributed to the shaped panels (2, 3) in such a manner that the given configuration remains stable; wherein
the shaped panels (2, 3) have a plurality of configurational elements formed into the shaped panels (2, 3) in opposite directions in the form of alternating elevations (4) and depressions (5); and
wherein the elevations (4) of the first (2) one of the two panels and the corresponding depressions (5) of the second (3) one of the two panels define opposing dot-like locations of shaped panel material which support each other in the evacuated state thus forming a dot grid of supporting points; and
wherein the depressions (5) of the first panel (2) and the corresponding elevations (4) of the second panel (3) extend away from each other so as to form a plurality of evacuable cavity cells (9) between the supporting points, the cavity cells (9) being interconnected in communication with each other in order to collectively form the cavity.

2. The vacuum insulation element (1) according to claim 1, **characterized in that** the elevations (4) and the depressions (5) of both panels (2, 3) have a two-dimensional dome-like shape formed in the respective panel, and the dome-like elevations (4) and dome-like depressions (5) are arranged alternately in the two dimensions of the plane of the panel in such a way that the dome-like elevations (4) have dome-like depressions (5) adjacent thereto on both sides in the two dimensions of the panel plane.

3. The vacuum insulation element (1) according to claim 1 or 2, **characterized in that** the dome-like depressions (5) of the first panel (2) and the corresponding dome-like elevations (4) of the second panel (3) define dot-like locations of shaped panel material between which a respective one of the cavity cells (9) is formed.

4. The vacuum insulation element (1) according to any of the preceding claims, **characterized in that** in both of the shaped panels (3, 4) a saddle point (30) is located between two adjacent elevations (4).

5. The vacuum insulation element (1) according to any of the preceding claims, **characterized in that** the evacuable multi-layered assembly has one or more shaped mounting edges (18) that can be connected to the item to be isolated or to a frame structure (22) so that in its installed state the multi-layered assembly is supported by the item or the frame structure (22).

6. The vacuum insulation element (1) according to any of the preceding claims, **characterized in that** the shaped panels (2, 3) have an identical configuration and are connected to each other in mirror symmetry.

7. The vacuum insulation element (1) according to claim 6, **characterized in that** the shaped panels (2, 3) arranged with mirror symmetry include patterns of rows of four-sided pyramids (16, 17) with a square base, which contact each other at opposite sides of the bases; and wherein
the tips of the rows of pyramids (16, 17) are alternately facing upwards and downwards with respect to the plane of the panel and the bases contact each other at opposite sides; and
the rows of pyramids (16, 17) are arranged next to each other in a manner so that the tips of the pyramids are alternately facing upwards and downwards and
the bases of adjacent rows of pyramids lie in a single plane.

8. The vacuum insulation element (1) according to any of the preceding claims, **characterized in that** three or more identically shaped panels (2, 3, 20) are joined to each other with mirror symmetry in a manner so that a shaped panel (2) that is placed normally is arranged adjacent to a shaped panel (20) that is placed inversely and a shaped panel (20) that is placed inversely is arranged adjacent to a shaped panel (3) that is placed normally, wherein a respective cavity is formed between each respective pair of adjacent panels, and wherein the superimposed cavities are staggered relative to each other.

9. The vacuum insulation element (1) according to any of the preceding claims, **characterized in that** the sealing surfaces (13) of the shaped panels (2, 3, 20) are hermetically bonded to each other by means of an adhesive, or that the shaped panels are hermetically welded together along the sealing frame (12).

10. The vacuum insulation element (1) according to any of the preceding claims, **characterized in that** the vacuum insulation element (1) has at least one valve or one integrally formed suction nozzle (11) which enables to evacuate, by means of a vacuum pump, or to aerate the interconnected cavity cells (9) between the shaped panels (2, 3, 20).

11. The vacuum insulation element (1) according to claim 7, **characterized in that** the vacuum insulation element (1) comprises at least three shaped panels (2, 3, 20), wherein the single shaped panel (20) or plurality of shaped panels (20) placed between the two outer shaped panels (2, 3) each have at least one opening which allows to evacuate or aerate all cavities of the vacuum insulation element (1) through a single valve or integrally formed suction nozzle (11).

12. The vacuum insulation element (1) according to any of the preceding claims, **characterized in that** an air-permeable intermediate panel is placed between the at least two shaped panels (2, 3), which intermediate panel provides for a higher manufacturing tolerance, since in this way the elevations (4) and depressions (5) supporting each other need not be placed that precisely against one another to ensure that the given configuration is stable in its evacuated state.

13. The vacuum insulation element (1) according to any of the preceding claims, **characterized in that** a cover panel (14, 15) or a cover sheet is applied on one or both of the outer surfaces of the outer shaped panels (2, 3) of the vacuum insulation element (1).

14. The vacuum insulation element (1) according to any of the preceding claims, **characterized in that** a first shaped mounting edge (18) on one side of the vacuum insulation element (1) protrudes beyond the most outwardly protruding configurational elements and is connected to the item to be insulated, wherein the vacuum insulation element (1) contacts the item to be insulated only on the mounting edge (18).

15. The vacuum insulation element (1) according to any of the preceding claims, **characterized in that** a first shaped mounting edge (18) on one side of the vacuum insulation element (1) protrudes beyond the most outwardly protruding configurational elements and is used for mounting to the item to be insulated, and a second shaped mounting edge (18) on the other side of the vacuum insulation element (1) protrudes beyond the most outwardly protruding configurational elements and allows to mount a cladding or cover.

## Revendications

1. Elément d'isolation par le vide (1) comprenant :
un dispositif multicouche susceptible d'être mis sous vide qui est doté d'au moins deux plaques de forme (2, 3),
les plaques de forme (2, 3) présentant chacune une zone de bord (7) qui les entourent, laquelle forme une surface d'étanchéité (13), les surfaces d'étanchéité (13) des plaques de forme (2, 3) étant, à l'état monté, hermétiquement reliées l'une à l'autre et formant de ce fait un cadre étanche (12), si bien qu'un espace creux se trouve scellé de façon étanche au vide entre les au moins deux plaques de forme (2, 3) et
la structure des au moins deux plaques de forme (2, 3), à l'état de mise sous vide, répartissant sur les plaques de forme (2, 3) la pression atmosphérique agissant sur le dispositif multicouche de telle manière que la structure initiale reste stable,
les plaques de forme (2, 3) présentant une pluralité d'éléments de structure réalisés à partir des plaques de forme (2, 3) dans des directions opposées, sous forme de reliefs (4) et de creux (5) qui alternent,
les reliefs (4) de la première (2) des deux plaques et les creux correspondants (5) de la deuxième (3) des deux plaques formant des emplacements ponctuels constitués du matériau des plaques, lesquels se font face, et, à l'état de mise sous vide, s'appuient l'un contre l'autre et forment ainsi un réseau de points d'appui et
les creux (5) de la première plaque (2) et les reliefs correspondants (4) de la deuxième plaque (3) étant orientés dans des directions opposées et constituant entre les points d'appui une pluralité de cellules d'espace creux (9) susceptibles d'être mises sous vide, les cellules d'espace creux (9) étant reliées entre elles de façon communicante, pour réaliser ainsi ensemble l'espace creux.

2. Elément d'isolation par le vide (1) selon la revendication 1 **caractérisé en ce que** les reliefs (4) et les creux (5) des deux plaques (2, 3) sont réalisés en forme de dômes en deux dimensions à partir de la plaque considérée et **en ce que** les reliefs en forme de dôme (4) et les creux en forme de dôme (5) sont disposés en alternance dans les deux dimensions du plan de plaque, de telle manière que des creux (5) en forme de dôme sont, dans chaque cas, voisins des reliefs en forme de dôme (4) dans les deux dimensions du plan de plaque de chaque côté.

3. Elément d'isolation par le vide (1) selon la revendication 1 ou 2 **caractérisé en ce que** les creux en forme de dôme (5) de la première plaque (2) et les reliefs en forme de dôme (4) correspondants de la deuxième plaque (3) forment des emplacements ponctuels réalisés à partir de matériau de plaque entre lesquels deux reliefs voisins (4) existe dans chaque cas une des cellules d'espace creux (9).

4. Elément d'isolation par le vide (1) selon l'une des revendications qui précèdent **caractérisé en ce que** dans les deux plaques de forme (3, 4) un pontage (30) se trouve entre deux reliefs voisins (4).

5. Elément d'isolation par le vide (1) selon l'une des revendications qui précèdent **caractérisé en ce que** le dispositif à multicouche apte à être mis sous vide présente un ou plusieurs bords d'incorporation (18) formé/formés extérieurement qui peut/peuvent être relié/reliés à l'objet qui doit être isolé ou à une structure de cadre (22), de telle manière qu'à l'état incorporé le dispositif multicouche se trouve maintenu par l'objet ou par la structure de cadre (22).

6. Elément d'isolation par le vide (1) selon l'une des revendications qui précèdent **caractérisé en ce que** les plaques de forme (2, 3) sont structurées de façon identique et sont reliées entre elles selon une symétrie spéculaire.

7. Elément d'isolation par le vide (1) selon la revendication 6 **caractérisé en ce que** les plaques de forme (2, 3) disposées selon une symétrie spéculaire présentent des structures constituées de rangées de pyramides (16, 17) à quatre côtés comportant une surface de base carrée, lesquelles se touchent par des côtés des surfaces de base situés en face les uns des autres et
les pointes des rangées de pyramides (16, 17) étant orientées alternativement vers le haut et vers le bas par rapport au plan de plaque et se touchant par des côtés situés en face les uns des autres et
les rangées de pyramides (16, 17) étant disposées les unes à côté des autres de telle manière que les pointes des pyramides sont orientées alternativement vers le haut et vers le bas et
la surface de base des rangées de pyramides voisines étant situées dans un plan.

8. Elément d'isolation par le vide (1) selon l'une des revendications qui précèdent **caractérisé en ce que** trois ou plus de trois plaques de forme identiques (2, 3, 20) sont reliées entre elles selon une symétrie spéculaire de telle manière qu'une plaque de forme (2) disposée à l'inverse est suivie d'une plaque de forme (20) disposée normalement et qu'une plaque de forme (3) disposée normalement est suivie d'une plaque de forme (20) disposée à l'inverse, un espace creux se trouvant formé dans chaque cas entre deux plaques voisines et les espaces creux superposés étant décalés les uns par rapport aux autres.

9. Elément d'isolation par le vide (1) selon l'une des revendications qui précèdent **caractérisé en ce que** les surfaces d'étanchéité (13) des plaques de forme (2, 3, 20) sont collées entre elles de façon étanche à l'air à l'aide d'un adhésif, ou bien **en ce que** les plaques de forme sont soudées entre elles de manière étanche à l'air le long du cadre d'étanchéité (12).

10. Elément d'isolation par le vide (1) selon l'une des revendications qui précèdent **caractérisé en ce que** l'élément d'isolation par le vide (1) est doté d'au moins un clapet ou d'un embout d'aspiration (11) réalisé sur lui en formant une seule pièce avec lui, au moyen duquel les cellules d'espace creux (9) reliées entre elles peuvent être mises sous vide au moyen d'une pompe à vide ou remplies d'air entre les plaques de forme (2, 3, 20).

11. Elément d'isolation par le vide (1) selon la revendication 7 **caractérisé en ce que** l'élément d'isolation par le vide (1) comprend au moins trois plaques de forme (2, 3, 20), la plaque de forme (20) individuelle, ou plusieurs plaques de forme (20) qui sont disposées entre les deux plaques de forme (2, 3) situées entre les bords, présentant chacune au moins une ouverture qui permet la mise sous vide, ou le remplissage d'air de tous les espaces creux de l'élément d'isolation par le vide (1) au moyen d'un clapet unique ou d'un embout d'aspiration unique (11) faisant corps avec l'élément d'isolation par le vide.

12. Elément d'isolation par le vide (1) selon l'une des revendications qui précèdent **caractérisé en ce qu'**entre les au moins deux plaques de forme (2, 3) est introduite une plaque intermédiaire perméable à l'air, la plaque intermédiaire rendant possible une plus grande tolérance de fabrication, du fait que les reliefs (4) et les creux (5) qui s'appuient les uns contre les autres n'ont pas besoin d'être placés les uns sur les autres de façon exacte, en vue de garantir la stabilité, à l'état sous vide, de la structure initiale.

13. Elément d'isolation par le vide (1) selon l'une des revendications qui précèdent **caractérisé en ce qu'**une plaque de couverture (14, 15) ou une feuille mixte de couverture, est mise en place sur une, ou sur les deux surfaces orientées vers l'extérieur des plaques de forme (2, 3) marginales de l'élément d'isolation par le vide (1).

14. Elément d'isolation par le vide (1) selon l'une des revendications qui précèdent **caractérisé en ce qu'**un premier bord d'incorporation (18) réalisé sur un côté de l'élément d'isolation par le vide (1) dépasse au-delà des éléments de structure qui font saillie le plus loin vers l'extérieur et **en ce qu'**il est relié à l'objet à isoler, l'élément d'isolation par le vide (1) ne venant en contact avec l'objet à isoler que par l'intermédiaire du bord d'incorporation (18).

15. Elément d'isolation par le vide (1) selon l'une des revendications qui précèdent **caractérisé en ce qu'**un premier bord d'incorporation (18) réalisé sur un côté de l'élément d'isolation par le vide (1) dépasse au-delà des éléments de structure qui font saillie le plus loin vers l'extérieur et **en ce qu'**il sert au montage sur l'objet à isoler et qu'un deuxième élément d'incorporation (18) dépasse sur l'autre côté de l'élément d'isolation par le vide (1) au-delà des éléments de structure qui font saillie le plus loin vers l'extérieur et permet le montage d'un habillage ou d'une couverture.
